# EUROPEAN PATENT APPLICATION

(11) **EP 1 633 106 A2**
(43) Date of publication of application: **08.03.2006**
(21) Application number: 05019011.5
(22) Date of filing: 01.09.2005
(51) Int. Cl.: H04L 29/06

(54) **Method and devices for multicasting**

(30) Priority: 01.09.2004 JP 2004254495
(71) Applicant: NTT DoCoMo, Inc., Tokyo (JP)
(72) Inventor: Isobe, Shinichi c/o Intellectual Property Dept., Chiyoda-ku Tokyo (JP); Nishimura, Kenji c/o Intellectual Property Dept., Chiyoda-ku Tokyo (JP); Okagawa, Takatoshi c/o Intellectual Property Dept., Chiyoda-ku Tokyo (JP)
(74) Representative: HOFFMANN EITLE

(57) **Abstract**

A server device used in a mobile communication system which transfers a multicast packet sent from a sending terminal to a receiving terminal through a packet transfer network, includes: a multicast tree determination unit configured to determine a multicast tree showing a transfer route of the multicast packet; and an instruction unit configured to instruct a multicast-corresponding router within the packet transfer network to prepare a multicast transfer table used for transferring the multicast packet, in accordance with a determined multicast tree.

## Description

### CROSS REFERENCE TO RELATED APPLICATION

This application is based upon and claims the benefit of priority from the prior Japanese Patent Application No. P2004-254495, filed on September 1, 2004; the entire contents of which are incorporated herein by reference.

### BACKGROUND OF THE INVENTION

### 1. Field of the Invention

The present invention relates to a mobile communication system and a mobile communication method which transfer a multicast packet sent from a sending terminal to a receiving terminal, and a server device and a sending terminal which are used in the mobile communication system and the mobile communication method.

Specifically, the present invention relates to a mobile communication system and a mobile communication method which realize multicast communication in IP-Based IMT network Platform (IP²) system, and a server device and a sending terminal which are used in the mobile communication system and mobile communication method.

### 2. Description of the Related Art

Conventionally, the Source Specific Multicast (SSM) technique has been largely studied in IETF as a system for supporting 1 to N type communication efficiently, in recent years.

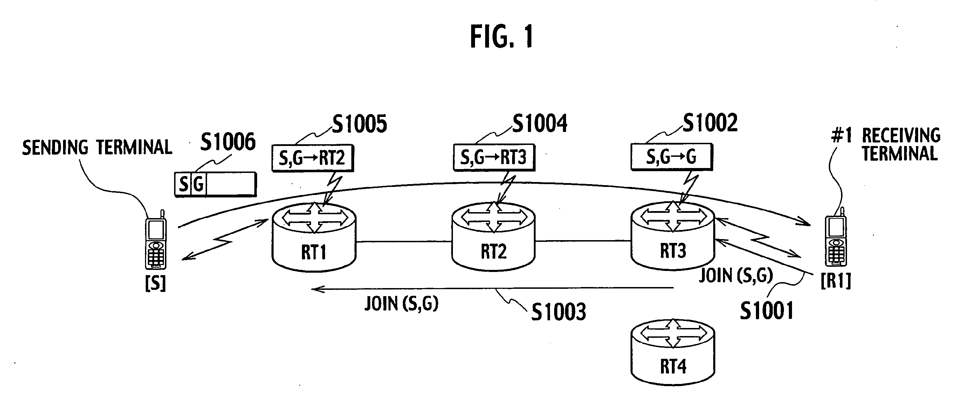

Here, with reference to Figs. 1 to 3, the SSM system which has been conventionally provided will be described. In the SSM system, a multicast channel which sends a multicast packet is designed to be determined depending on a combination of an address "S" of a sending terminal and a multicast address (group address) "G".

It should be noted that in this specification, what a sentence "to set a receiving terminal to receive a multicast packet sent through a specific multicast channel" means is described as "the receiving terminal joins the multicast channel".

On the other hand, what a sentence "to set a receiving terminal not to receive a multicast packet sent through a multicast channel in which the receiving terminal is joining" means is described as "the receiving terminal leaves from the multicast channel" instead.

As shown in Fig. 1, in step S1001, once a receiving terminal #1 determines to join a specific multicast channel (S, G), the receiving terminal #1 informs the multicast channel (S, G) to a router RT3 by use of a Join message (a join request message). The router RT3 is a first hop router which is connected to the receiving terminal #1.

Here, "S" is an address of a sending terminal, and "G" is a multicast address.

When the router RT3 receives a multicast packet (S, G) sent through the multicast channel (S, G) in step S1002, the router RT3 registers the received multicast packet (S, G) in its multicast transfer table, so as to transfer the multicast packet (S, G) to a network under the router RT3 directly, and transfers a Join message to the receiving terminal in Step 1003.

Hereinafter, the multicast packet (S, G) includes an address "S" of the sending terminal and the multicast address "G".

In steps S1004 and 1005, when a router RT2 and a router RT1 on a route for transferring Join message receive the multicast packet (S, G), the router RT2 and the router RT1 register the multicast packet (S, G) in respective multicast transfer tables, so as to transfer the multicast packet (S, G) to an interface which has received the Join message.

In step 1006, when the aforementioned registration has been completed in the multicast transfer tables in all of the routers RT1, RT2, and RT3 on a transfer route from the sending terminal to the receiving terminal #1, the multicast packet (S, G) will be transferred to the receiving terminal #1.

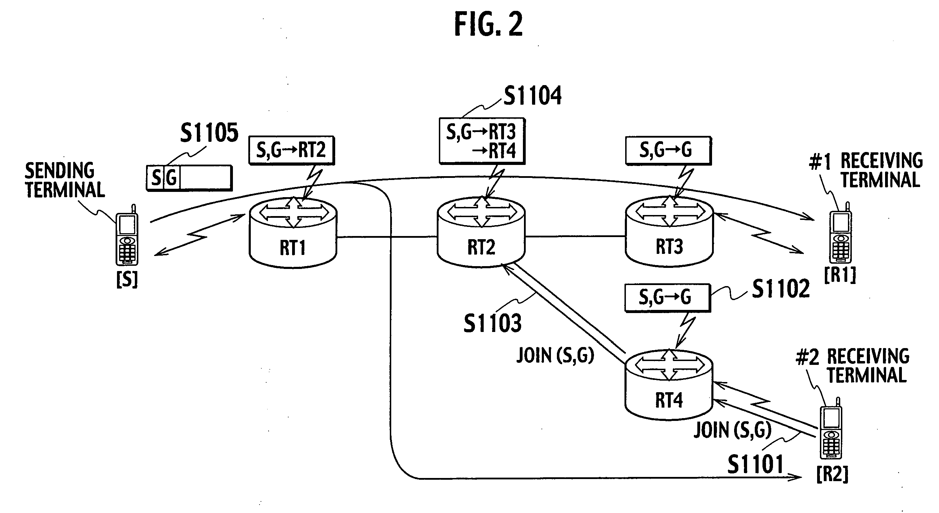

Next, referring to Fig. 2, how another receiving terminal #2 joins the same multicast channel (S, G) will be described.

In step S1101, once a receiving terminal #2 determines to join the multicast channel (S, G), the receiving terminal #2 informs the multicast channel (S, G) to a router RT4 by use of a Join message. The router RT4 is a first hop router which is connected to the receiving terminal #2.

In step 1102, the router RT4 registers the received multicast packet (S, G) in its multicast transfer table, so as to transfer the multicast packet (S, G) to a network under the router RT4 directly, similarly to the case in Fig. 1. In step 1103, the router RT4 transfers a Join message to a sending terminal.

In step 1104, a router RT2 which has already constructed a multicast tree for the multicast channel (S, G) registers a branch router RT4 in its multicast transfer table.

In step 1105, the multicast packet (S, G) which has been sent from the sending terminal is duplicated by the router RT2 and transferred to the receiving terminals #1 and #2.

Since the conventional SSM system does not support the mobility control of a communication terminal, it requires to execute the conventional SSM system with a protocol such as Mobile IP (v6) to be used in mobile communication system.

However, when the conventional SSM system and the protocol such as Mobile IP (v6) are concurrently performed in order to realize multicast communication system in the mobile communication system, there has been a problem in that processing load is increased at each device in the mobile communication system.

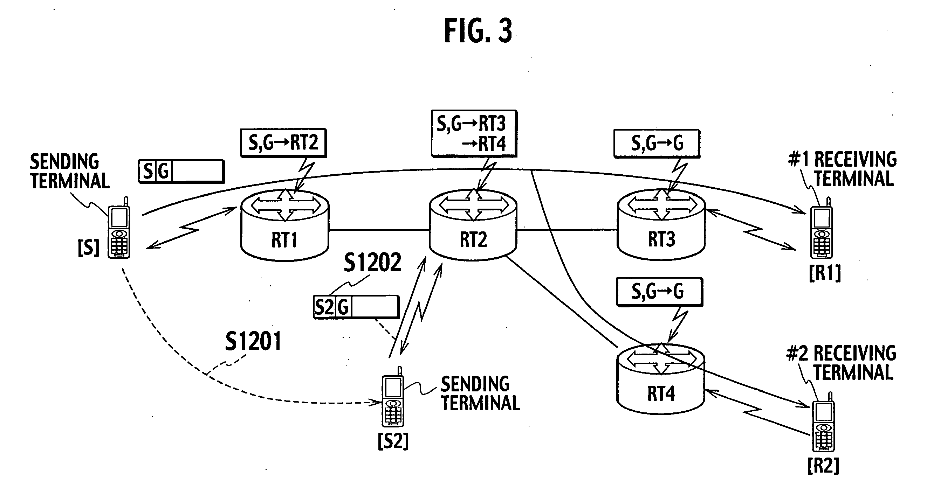

Further, when the conventional SSM system is configured to operate concurrently with the protocol such as Mobile IP (v6), a problem shown in Fig. 3 occurs.

Fig. 3 shows a mobile communication system based on the conventional SSM system. Here, it is assumed that each communication terminal (both of a sending terminal and a receiving terminal) supports Mobile IP.

As shown in Fig. 3, in step 1201, when a sending terminal moves and performs handover processing, an address (an IP routing address) of the sending terminal changes from "S" to "S2".

In step S1202, the moved sending terminal sends a multicast packet (S2, G) . However, the multicast packet (S2, G) is not sent to either a receiving terminal #1 or a receiving terminal #2. This is because a multicast tree is not constructed in each router within the packet transfer network with respect to a multicast channel (S2, G).

Therefore, in order to transfer the multicast packet (S2, G) from the sending terminal to the receiving terminal after the handover processing of the sending terminal has been processed, it is required to construct the multicast tree concerning the multicast channel (S2, G) in each router within the packet transfer network once again. Thus, the processing load in each router increases.

As the next-generation mobile communication network architecture, the IP² system has been studied.

However, in the conventional IP² system, though the mobility control of a communication terminal has been substantially studied with respect to the 1 to 1 type communication, there has been a problem in that mobility control of a communication terminal in multicast communication among groups, such as the 1 to N type and the N to N type communication has not yet studied.

### BRIEF SUMMARY OF THE INVENTION

The present invention has been made considering the problems, and its object is to provide a mobile communication system, a mobile communication method, a server device, and a sending terminal, which is capable of supporting the mobility control of a communication terminal in multicast communication without increasing the processing load at each device within the mobile communication system.

A first aspect of the present invention is summarized as a server device used in a mobile communication system which transfers a multicast packet sent from a sending terminal to a receiving terminal through a packet transfer network. The server device includes: a multicast tree determination unit configured to determine a multicast tree showing a transfer route of the multicast packet; and an instruction unit configured to instruct a multicast-corresponding router within the packet transfer network to prepare a multicast transfer table used for transferring the multicast packet, in accordance with a determined multicast tree.

In the first aspect, the server device can include a multicast information storage unit configured to store multicast information which include the multicast tree for the multicast packet, a list of receiving terminals set to receive the multicast packet, and an access router to which the sending terminal which sends the multicast packet is connected.

In the first aspect, the instruction unit can be configured to instruct the instruction only to a multicast-corresponding router which is to be a branch point in the multicast trees.

In the first aspect, the multicast tree determination unit can be configured to determine the multicast tree, when a join request message or a leave request message is sent from the receiving terminal.

In the first aspect, the multicast tree determination unit can be configured to determine the multicast tree, when an access router to which the sending terminal is connected is changed.

A second aspect of the present invention is summarized as a sending terminal used in mobile communication system for transferring a multicast packet sent from the sending terminal to a receiving terminal through a packet transfer network. The sending terminal includes a multicast packet sender unit configured to send the multicast packet containing a host address of the sending terminal and a multicast address.

A third aspect of the present invention is summarized as a mobile communication system for transferring a multicast packet sent from a sending terminal to a receiving terminal through a packet transfer network. A server device connected to the packet transfer network includes: a multicast tree determination unit configured to determine a multicast tree showing a transfer route of the multicast packet; and an instruction unit configured to instruct a multicast-corresponding router in the packet transfer network to prepare a multicast transfer table used for transferring the multicast packet, in accordance with a determined multicast tree; and the multicast-corresponding router includes a packet transfer unit configured to transfer the multicast packet, based on the multicast transfer table prepared in accordance with the instruction.

A fourth aspect of the present invention is summarized as a mobile communication method for transferring a multicast packet sent from a sending terminal to a receiving terminal through a packet transfer network. The method includes of: determining a multicast tree showing a transfer route of the multicast packet, in a server device connected to the packet transfer network; instructing a multicast-corresponding router within the packet transfer network to prepare a multicast transfer table used for transferring the multicast packet, in accordance with a determined multicast tree, in the server device; and transferring the multicast packet based on the multicast transfer table prepared in accordance with the instruction, in the multicast-corresponding router.

### BRIEF DESCRIPTION OF THE SEVERAL VIEWS OF THE DRAWINGS

Fig. 1 is a diagram for describing a mobile communication system which uses the conventional SSM system.
Fig. 2 is a diagram for describing an action a new receiving terminal performs a join processing in the mobile communication system which uses the conventional SSM system
Fig. 3 is a diagram for describing an action of a sending terminal which moves in the mobile communication system which uses the conventional SSM system.
Fig. 4 is a diagram for describing a routing mechanism in a mobile communication system which uses the IP² technique.
Fig. 5 is a diagram for describing a routing mechanism of a multicast packet in a mobile communication system which uses the IP² technique.
Fig. 6 is a block diagram showing a whole configuration of a mobile communication system according to a first embodiment of the present invention.
Fig. 7 is a diagram showing a function of a server device according to the first embodiment of the present invention.
Fig. 8 is a diagram for describing primitives which are used in the mobile communication system according to the first embodiment of the invention.
Fig. 9 is a block diagram showing a function of a multicast-corresponding router according to the first embodiment of the invention.
Fig. 10 is a diagram showing an example of multicast transfer cache tables stored in routers according to the first embodiment of the present invention.
Fig. 11 is a block diagram showing a function of a communication terminal according to the first embodiment of the present invention.
Fig. 12 is a diagram for describing how a first receiving terminal joins a multicast channel in the mobile communication system according to the first embodiment of the present invention.
Fig. 13 is a sequence diagram showing how the first receiving terminal joins the multicast channel in the mobile communication system according to the first embodiment of the present invention.
Fig. 14 is a diagram for describing how another receiving terminal newly joins the multicast channel through an access router, which is different from the router to which the first receiving terminal is connected, in the mobile communication system according to the first embodiment of the present invention.
Fig. 15 is a sequence diagram showing how another receiving terminal newly joins the multicast channel through the access router, which is different from the router to which the first receiving terminal is connected, in the mobile communication system according to the first embodiment of the present invention.
Fig. 16 is a diagram for describing how another receiving terminal newly joins the multicast channel through an access router, to which the first receiving terminal is connected, in the mobile communication system according to the first embodiment of the present invention.
Fig. 17 is a sequence diagram showing how another receiving terminal newly joins the multicast channel through the access router, to which the first receiving terminal is connected, in the mobile communication system according to the first embodiment of the present invention.
Fig. 18 is a diagram for describing how a receiving terminal leaves from the multicast channel in the mobile communication system according to the first embodiment of the present invention.
Fig. 19 is a sequence diagram showing how the receiving terminal leaves from the multicast channel in the mobile communication system according to the first embodiment of the present invention.
Fig. 20 is a diagram for describing how a specific receiving terminal leaves from the multicast channel when a plurality of receiving terminals exist under the same access router in the mobile communication system according to the first embodiment of the present invention.
Fig. 21 is a sequence diagram showing how the specific receiving terminal leaves from the multicast channel when the plurality of receiving terminals exist under the same access router in the mobile communication system according to the first embodiment of the present invention.
Fig. 22 is a diagram for describing how a receiving terminal performs hand-over processing to a different access router in the mobile communication system according to the first embodiment of the present invention.
Fig. 23 is a sequence diagram showing how the receiving terminal performs hand-over processing to the different access router in the mobile communication system according to the first embodiment of the present invention.
Fig. 24 is a diagram for describing how a sending terminal performs hand-over processing to a different access router in the mobile communication system according to the first embodiment of the present invention.
Fig. 25 is a sequence diagram showing how the sending terminal performs hand-over processing to the different access router in the mobile communication system according to the first embodiment of the present invention.
Fig. 26 is a diagram for describing how a first receiving terminal joins a multicast channel in a mobile communication system according to a first modified example of the present invention.
Fig. 27 is a diagram showing how a multicast tree is constructed when a receiving terminal is located in a different packet transfer network in a mobile communication system according to a second modified example of the present invention.
Fig. 28 is a diagram showing how a multicast tree is constructed when a sending terminal locates in a different packet transfer network in mobile communication system according to a third modified example of the present invention.

### DETAILED DESCRIPTION OF THE INVENTION

### (Configuration of a mobile communication system according to a first embodiment of the present invention)

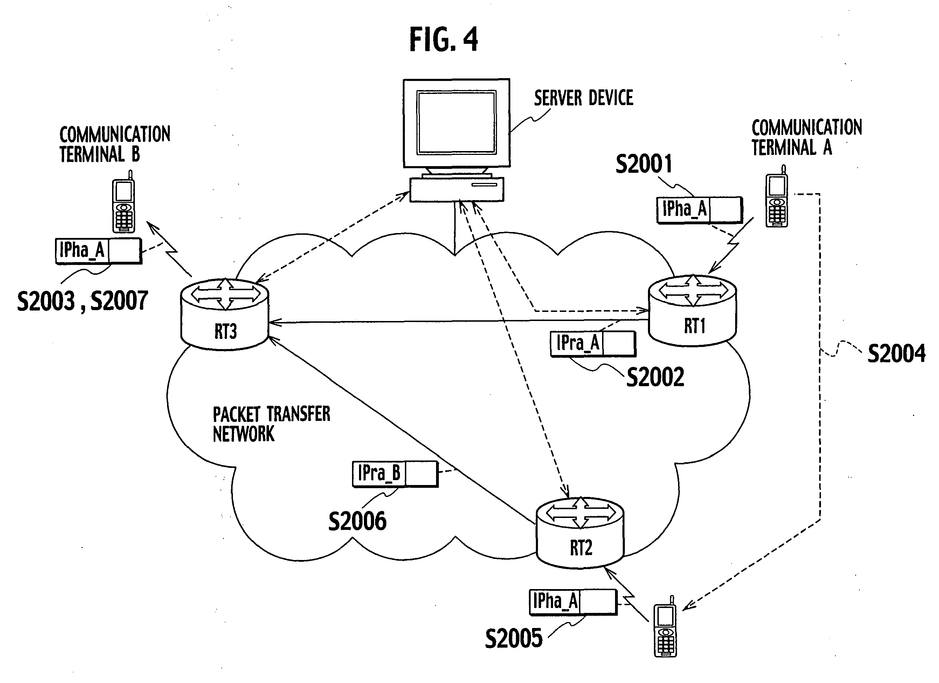

With reference to Figs. 4 to 11, a configuration of the mobile communication system according to the first embodiment of the present invention will be described.

Fig. 4 shows a routing mechanism of the mobile communication system utilizing the IP² system (the IP² architecture) according to this embodiment of the present invention.

In the IP² system, two addresses, an IP host address (IPha) and an IP routing address (IPra), are used.

Here, the IP host address is address information to identify a communication terminal, in a wireless segment between the communication terminal and a first hop router (an access router) to which the communication terminal is connected.

The IP routing address is address information to provide location information of the communication terminal and to transfer a packet within a packet transfer network. The IP routing address is used for communication between the sending terminal and the first hop router (the access router) to which the receiving terminal is connected.

A correspondence table for associating the IP host address with the IP routing address is controlled by a server device in the packet transfer network, and is set in the first hop router to which the receiving terminal is connected.

As shown in Fig. 4, in step S2001, a communication terminal A determines an IP host address "IPha_A" of the communication terminal A, and sends a packet including the determined IP host address "'IPha_A".

In step S2002, a first hop router RT1, to which the communication terminal A is connected, performs address change processing or encapsulation processing to the packet received from the communication terminal A. The address change processing is designed to convert the IP host address "IPha_A" included in the received packet to an IP routing address "IPra_A". The encapsulation processing is designed to encapsulate the received packet with an IP routing address "IPra_A" .

Next, the router RT1 transfers the packet to a first hop router RT3, to which a communication terminal B is connected. The communication terminal B is a correspondent of the communication terminal A.

In step S2003, the router RT3 performs address change processing or decapsulation processing to the packet received from the router RT1. The address change processing is designed to convert the IP routing address "IPra_A" included in the received packet to the IP host address "IPha_A". The decapsulation processing is designed to decapsulate the received packet with the IP routing address "TPra_A". Then, the router RT3 sends the packet to the communication terminal B.

Next, in step S2004, the communication terminal A moves from an area where the communication terminal A is connected to the router RT1 to another area where the communication terminal A is connected to a router RT2.

In step S2005, the communication terminal A sends a packet including the same IP host address "IPha_A" as that before the communication terminal A has moved, to the router RT2 via a wireless segment.

In step S2006, a router RT2 performs address change processing or encapsulation processing to the packet received from the communication terminal A. The address change processing is designed to convert the IP host address "IPha_A" included in the received packet to an IP routing address "IPra_B". The encapsulation processing is designed to encapsulate with the IP routing address "IPra_B". Here, the IP routing address "IPra_B" is a new IP routing address of the communication terminal A. Then, the router RT2 transfers the packet to the first hop router RT3.

In step S2007, the router RT3 performs address change processing or decapsulation processing to the packet received from the router RT2. The address change processing is designed to convert the IP routing address "IPra_B" included in the received packet to the IP host address "IPha_A". The decapsulation processing is designed to decapsulate with the IP routing address "IPra_B". Next, the router RT3 sends the packet to the communication terminal B.

Thus, by separately using a IP host address and an IP routing address, it becomes possible to hide a fact that a sending terminal has moved from a receiving terminal.

Moreover, a sending terminal here always sends a packet by using only one IF host address. Therefore, it is expected that a problem, e.g., when a sending terminal moves, the "sending terminal address" is changed and accordingly packets cannot be transferred, which occurs when the mobile communication system using the conventional SSM system is employed does not occur.

Hereinafter, in this specification, a packet transferred within the packet transfer network is described to be encapsulated when being transferred.

A sending terminal of multicast packets transfers a packet, by using a multicast address allocated by the packet transfer network or determined by the sending terminal itself.

It should be noted that the multicast address here belongs to a band which is different from that for addresses (an IP host address and an IP routing address) used in a unicast communication network.

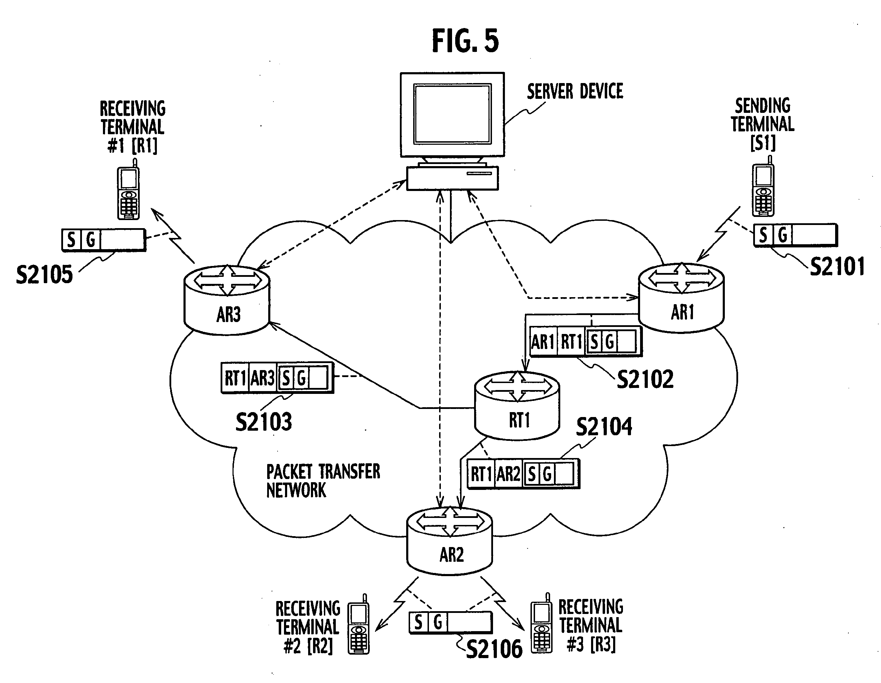

In Fig. 5, a routing mechanism of multicast packets in the mobile communication system using the IP² technique is shown according to this embodiment of the present invention.

In step S2101, a sending terminal of multicast packets sends multicast packets by setting an IP host address "S" and a multicast address "G" of the sending terminal respectively in "Source address" field and in "Destination address" field in a multicast packet (IP packet) .

In routers within the packet transfer network, it is assumed that Routing Cache Table (RCT) for encapsulation has already been set.

In step S2102, an access router AR1 which has received the multicast packet (S, G) refers the Routing Cache Table, and sets "an AR1 address" and "an RT1 address" respectively in "Source address" field and "Destination address" to perform encapsulation processing. Next, the access router AR1 transfers the multicast packet (S, G) to the router RT1.

The router RT1 performs decapsulation processing to the received multicast packet (S, G), refers to the Routing Cache Table, and duplicates the multicast packet (S, G). Next, in steps S2103 and S2104, the router RT1 transfers the multicast packet (S, G) to access routers AR3 and AR2.

In steps S2105 and S2106, the access routers AR3 and AR2 are respectively at terminals in a multicast tree configuration.

Therefore, the access routers AR3 and AR2 perform decapsulation processing to the received multicast packet (S, G) respectively, and sends the multicast packet (S, G) in which "S" and "G" have been respectively set in "Source address" field and "Destination address" field to receiving terminals #1 to #3.

As a result, the receiving terminals #1 to #3 can receive the multicast packets of a multicast channel where the receiving terminals #1 to #3 join. The multicast channel is specified by a combination of a source address and a multicast address.

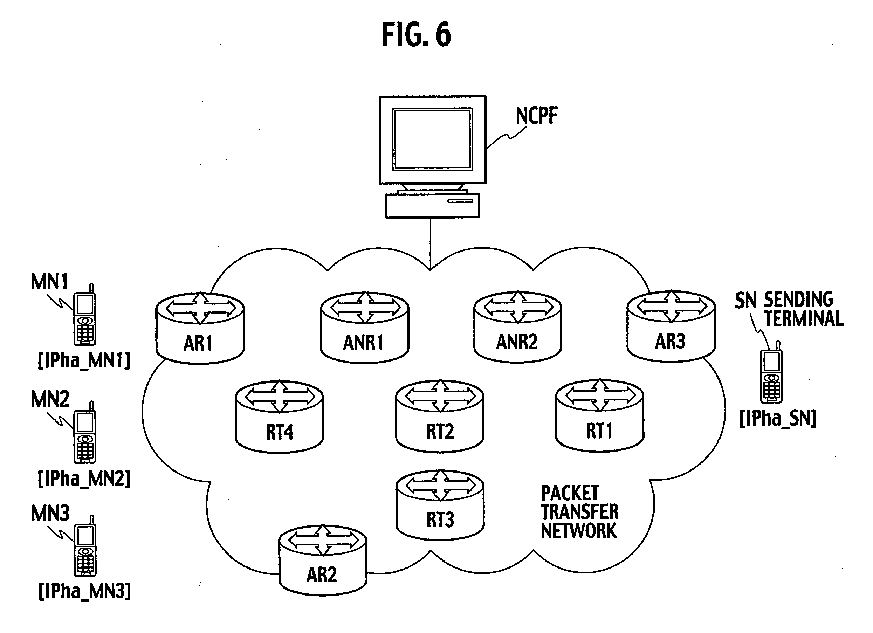

Fig. 6 shows a whole configuration of the mobile communication system according to this embodiment of the present invention.

As shown in Fig. 6, the mobile communication system according to this embodiment of the present invention is configured with a server device NCPF (Network Control Platform) and a packet transfer network.

In this embodiment, the mobile communication system configured to transfer a multicast packet (IPha_SN, G) sent from a sending terminal SN to receiving terminals MN1 to MN3 through the packet transfer network will be described.

The server device NCPF is provided to perform intelligent functions such as handover, QoS control, and multicast communication in the IP² technique.

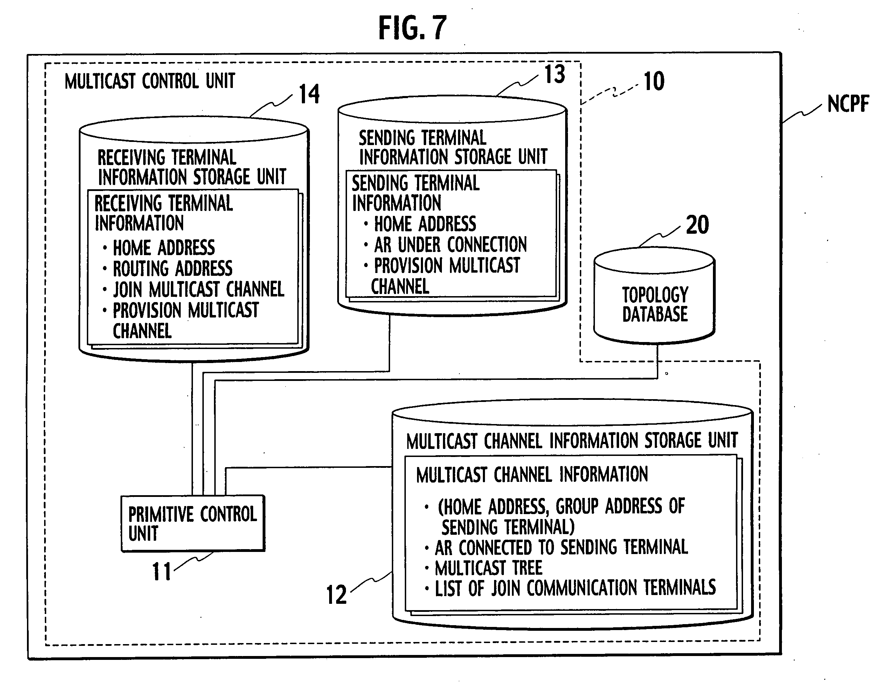

Specifically, as shown in Fig. 7, the server device NCPF includes a multicast control unit 10 and a Topology database (DB) 20.

The multicast control unit 10 includes a primitive control unit 11, a multicast channel information storage unit 12, a sending terminal information storage 13, and a receiving terminal information storage unit 14.

The primitive control unit 11 is configured to define general interfaces (primitives) between the packet transfer network and the primitive control unit 11, and to support realization of multicast communication in the packet transfer network.

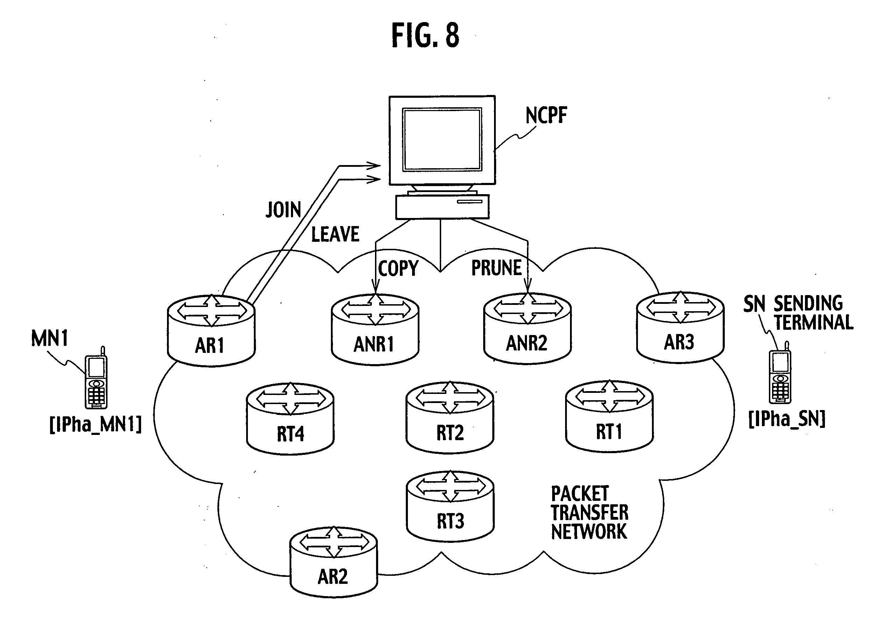

In Fig. 8, the primitives sent and received between the packet transfer network and the primitive control unit 11 are shown.

Concretely, as shown in Fig. 8, several primitives such as a Join primitive, a Leave primitive, a Copy primitive, and a Prune primitive are defined.

The Join primitive is used to inform the server device NCPF that the receiving terminal wants to join the specific multicast channel when the access router AR received a Join message (a join request message) from the receiving terminal.

The Leave primitive is used to inform the server device NCPF that the receiving terminal wants to leave from the multicast channel where the receiving terminal is joining when the access router AR receives a Leave message (a leave request message) from the receiving terminal.

The Copy primitive and the Prune primitive are used respectively to prepare and delete a multicast transfer table at each branch point of the multicast tree.

The aforementioned primitives can be generally used and can be applied to other control units. Moreover, though there is an acknowledgement message as a response to each primitive, this message is omitted in this specification.

Further, in the mobile communication system according to this embodiment of the present invention, primitives other than the abovementioned ones, which are described in *T. Okagawa* et. al. *"Basic Primitives and packet transmission* mechanism in *IP*^{*2*} *", Technical Report of IEICE,* November, *2002,* can be also used.

It should be noted that the primitive control unit 11 is configured to instruct multicast-corresponding routers AR and ANR in the packet transfer network to prepare a multicast transfer cache table used when the multicast packet (S, G) is transferred, in accordance with a multicast tree constructed by the multicast control unit 10.

The primitive control unit 11 can be configured to instruct the aforementioned instruction only to multicast-corresponding routers AR and ANR which are located at branch points in the multicast tree.

The multicast channel information storage unit 12 is configured to store multicast information concerning each multicast channel.

For example, the multicast channel information includes a multicast channel ID which is specified by "an IP host address of the sending terminal" and "a group address (a multicast address)", information concerning the access router AR connected to the sending terminal, information concerning the multicast tree, and a list of communication terminals which are joining the multicast channel.

The sending terminal information storage unit 13 is configured to store sending terminal information concerning each sending terminal.

For example, the sending terminal information includes an IP host address of the sending terminal, an IP routing address of the sending terminal, and information concerning a multicast channel which is provided by the sending terminal.

The receiving terminal information storage unit 14 is configured to store receiving terminal information concerning each receiving terminal.

For example, the receiving terminal information includes an IP host address of the receiving terminal, an IP routing address of the receiving terminal, information concerning a multicast channel where the receiving terminal is joining, and information concerning a multicast channel which is provided by the receiving terminal.

It should be noted that the multicast control unit 10 is configured to cooperate with Topology DB 20 and to construct a multicast tree which shows a transfer route of a multicast packet.

The multicast control unit 10 can also be configured to construct the multicast tree, when a Join message or a Leave message is sent from the receiving terminal.

Moreover, the multicast control unit 10 can be configured to construct the multicast tree, when the access router AR connected to the sending terminal is changed (namely, when the sending terminal performs handover pracessing).

The packet transfer network is configured to perform simple packet transfer processing. In the packet transfer network, a plurality of multicast-corresponding routers AR and ANR are arranged.

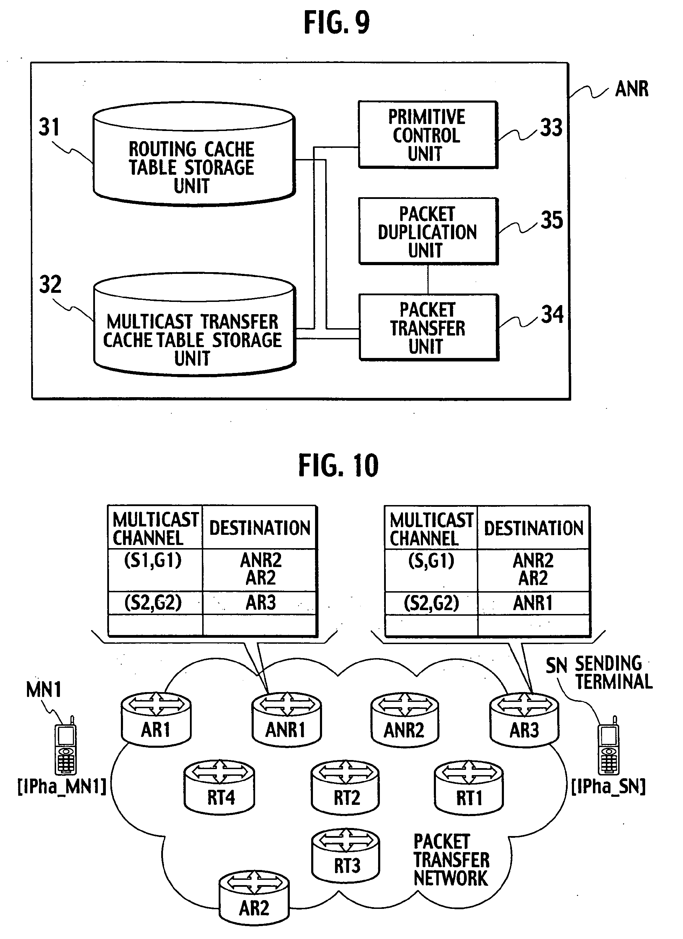

In Fig. 9, functions of a multicast-corresponding router ANR (Advanced aNchor Router) according to this embodiment of the present invention are shown. It should be noted that the function of the multicast-corresponding router AR is the same as that of the multicast-corresponding router ANR.

As shown in Fig. 9, the multicast-corresponding router ANR includes a routing cache table storage unit 31, a multicast transfer cache table storage unit 32, a primitive control unit 33, a packet transfer unit 34, and a packet duplicate unit 35.

The routing cache table storage unit 31 is configured to store a routing cache table (RCT) which is used for encapsulation in unicast communication in the packet transfer network.

The multicast transfer cache table storage unit 32 is configured to store a multicast transfer cache table which is used for transferring a multicast packet in multicast communication in the packet transfer network.

Concretely, as shown in Fig. 10, the multicast transfer cache table stores to associate a multicast channel ID with a destination to which the multicast packet is transferred.

Incidentally, the multicast transfer cache table is prepared by a Copy primitive from the server device NCPF, and is deleted by a Prune primitive.

The primitive control unit 33 is configured to define the aforementioned primitives between the aforementioned server device NCPF and the primitive control unit 33 , and to support realization of multicast communication in the packet transfer network.

The packet transfer unit 34 is configured to perform transfer processing concerning a received multicast packet, in accordance with the multicast transfer cache table.

Concretely, the packet transfer unit 34 is configured to transfer a multicast packet which has been duplicated by the packet duplication unit 35 to a destination which corresponds to the received multicast packet (S, G).

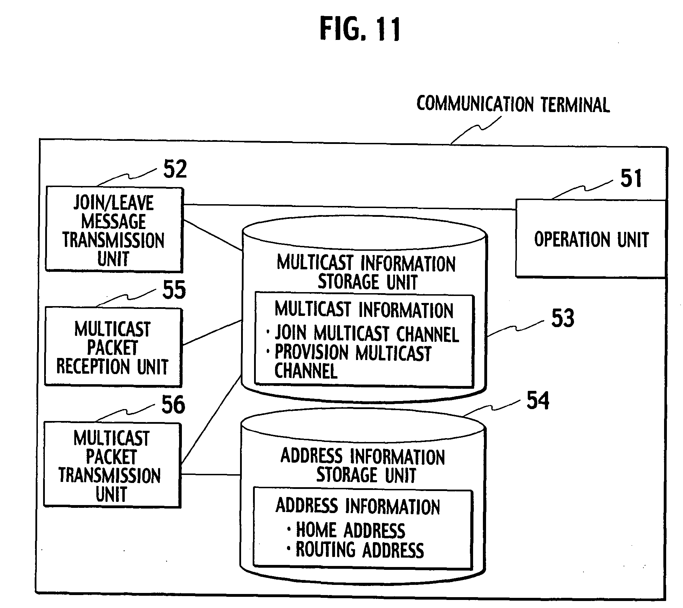

Fig. 11 shows functions of a communication terminal according to this embodiment of the present invention. The communication terminal has both functions as a sending terminal and a receiving terminal.

As shown in Fig. 11, the communication terminal has an operation unit 51, a Join/Leave message sending unit 52, a multicast information storage unit 53, an address information storage unit 54, a multicast packet receiving unit 55, and a multicast packet sending unit 56.

The operation unit 51 is used to operate the communication terminal. A user of the communication terminal can join a certain multicast channel and leave from the certain multicast channel by operating the operation unit 51.

The Join/Leave message sending unit 52 is configured to send a Join message or a Leave message to the access router AR, in response to instructions from the operation unit 51.

The multicast information storage unit 53 is configured to store multicast information which includes information concerning a multicast channel where the communication terminal joins and another multicast channel which the communication terminal provides.

The address information storage unit 54 is configured to store address information including the IP host address and the IP routing address of the communication terminal.

The multicast packet receiving unit 55 is configured to refers to the multicast information storage unit 53, and to receive multicast packets which are sent through the multicast channel where the communication terminal joins.

The multicast packet sending unit 56 is configured to refer to the multicast information storage unit 53, and to send the multicast packets through the multicast channel which the communication terminal provides.

It should be noted that the multicast packet sending unit 56 is configured to send the multicast packets including the IP host address and the multicast address of the communication terminal.

### (Operations of the mobile communication system according to the first embodiment of the present invention)

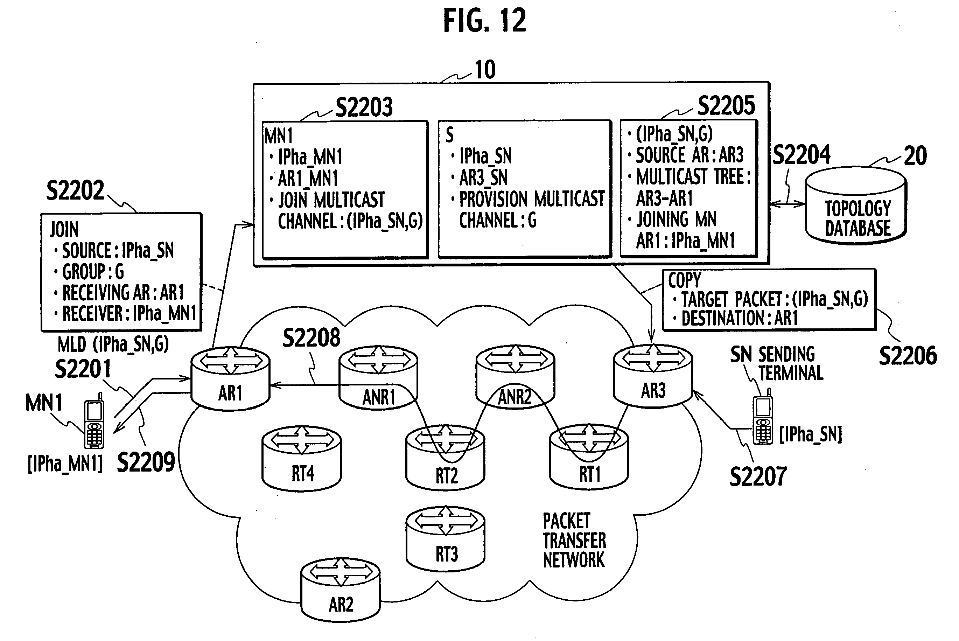

Hereinafter, referring to Figs. 12 to 22, operations of the mobile communication system according to this embodiment will be described.

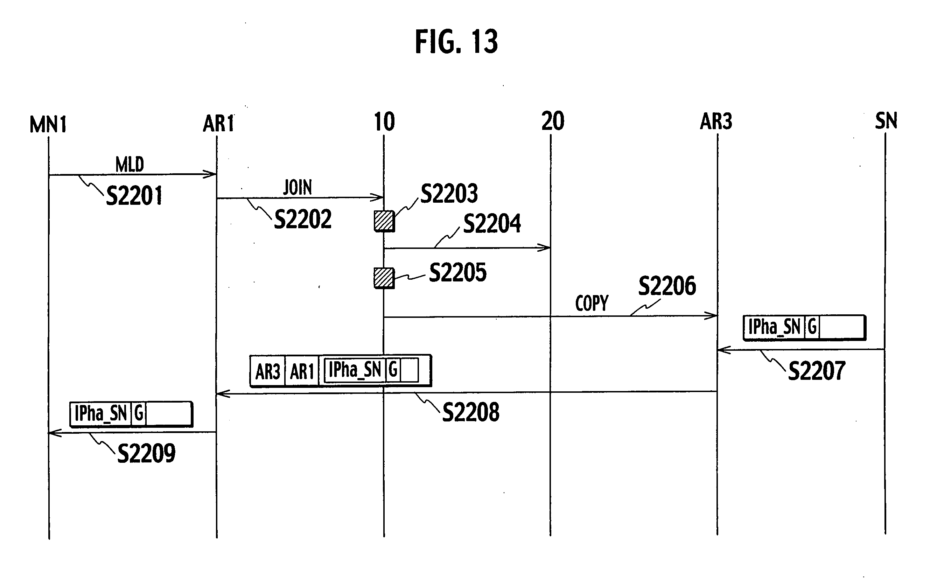

First, with reference to Figs. 12 and 13, operations how a first receiving terminal MN1 joins a multicast channel (IPha_SN, G) will be described.

According to the IP² technique, a communication terminal is capable of being both in "Active state" and in "Dormant state". Unless otherwise clearly described, the communication terminal is assumed to have been already in "Active state" which permits communication.

In step 2201, the receiving terminal MN1 informs a multicast channel (IPha_SN, G) which the receiving terminal MN1 wants to join, to an access router AR1 to which the receiving terminal MN1 is connected, by use of Multicast Listener Discovery (MLD). Namely, the receiving terminal MN1 sends a Join message to the access router AR1. Here, the multicast channel (IPha_SN, G) is assumed to be previously informed to the receiving terminal MN1.

In step S2202, the access router AR1 prepares a Join primitive, and sends the Join primitive to a multicast control unit 10 of a server device NCPF.

The Join primitive includes a multicast channel ID (the IP host address "IPha_SN" of a sending terminal and the group address "G") which the receiving terminal MN1 wants to join, an IP host address "IPha_MN1" of the receiving terminal MN1, and information concerning the access router to which the receiving terminal MN1 is connected.

In step S2203, the multicast control unit 10 registers receiving terminal information concerning the receiving terminal MN1 in a receiving terminal information storage unit 14 according to the received Join primitive.

In step S2204, the multicast control unit 10 judges that a multicast tree is required to be constructed, and cooperates with Topology DB 20 to determine a multicast tree configuration concerning the multicast channel (IPha_SN, G).

In step 2205, the multicast control unit 10 registers a list of the multicast-corresponding routers AR3 and AR1, the receiving terminal MN1, and the access router AR1, in the multicast channel information concerning the multicast channel (IPha_SN, G) within the multicast channel information storage unit 12. The routers AR3 and AR1 form branch points respectively. The access router AR1 is connected to the receiving terminal MN1.

In step S2206, the multicast control unit 10 issues a Copy primitive to the access router AR3. When receiving a multicast packet which has been set "IPha_SN" in its "Source address" field and "G" in its "Destination address" field, the multicast control unit 10 instructs the access router AR1 to perform encapsulation processing of a multicast packet and transfer it.

In step S2207, when a sending terminal SN sends the multicast packet (IPha_SN, G) to the access router AR3, in step 2208, the access router AR3 performs encapsulation processing to the received multicast packet (IPha_SN, G) and transfers it.

In this encapsulation processing, "an address of AR3" is set in a "Source address field", and "an address of AR1" is set in a "Destination address" field respectively.

In step 2209, the access router AR1 performs decapsulation processing to the received multicast packet (IPha_SN, G), and transfers it to a wireless segment.

As the result, the receiving terminal MN1 can receive the multicast packet which has been set "IPha_SN" in its "Source address" field and "G" in its "Destination address" field respectively.

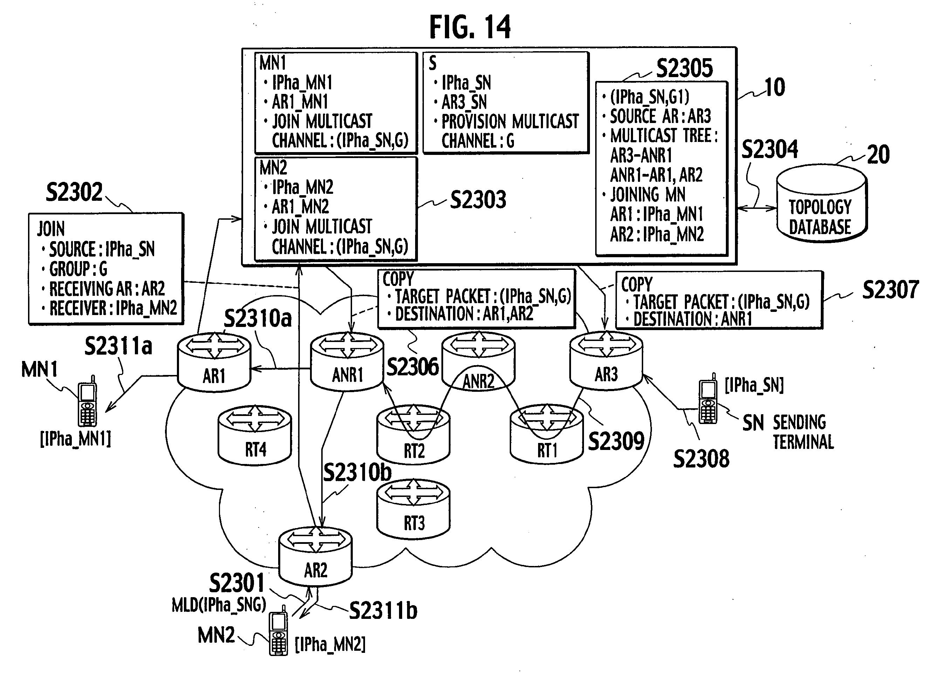

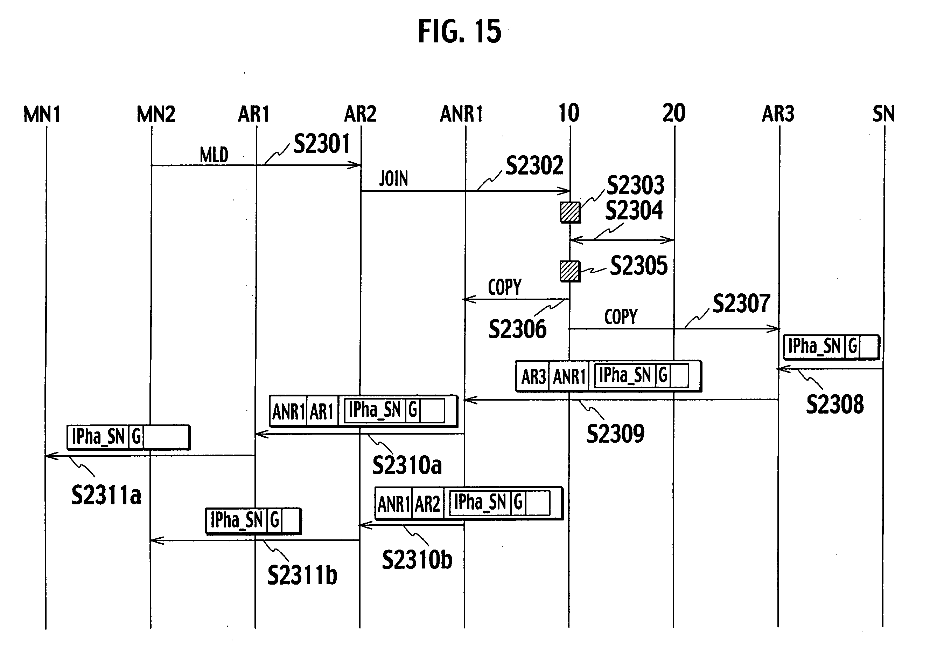

Secondly, with reference to Figs. 14 and 15, processes how another receiving terminal MN2 joins the multicast channel (IPha_SN, G) through an access router AR2 will be described.

The access router AR2 is different from the access router AR1 which is connected to the receiving terminal MN1 that has joined first.

Processes in steps S2301 to S2303 are the same as those described before with respect to steps 52201 to 2203 in Figs. 12 and 13.

In step S2304, the multicast control unit 10 judges that a new multicast tree is required to be reconstructed. This is because a Join primitive is received from the access router AR2 which is different from the access router AR1 connected to the receiving terminal MN1.

Next, the multicast control unit 10 cooperates with Topology DB 20 and reconstructs the multicast tree (AR3 ' ANR1 ' AR1, AR2).

In step S2305, the multicast control 10, based on the reconstructed multicast tree, registers that the access router AR3 branches to the multicast-corresponding router ANR1, and the multicast-corresponding router ANR1 then branches to the access routers AR1 and AR2 , to the multicast channel information storage unit 12.

Further, the multicast control unit 10 registers that the receiving terminal MN2 has joined in the multicast channel information storage unit 12.

In step S2306, the multicast control unit 10 sends a Copy primitive that instructs to duplicate the multicast packet (IPha_SN, G) and to transfer the duplicated multicast packet to the access routers AR1 and AR2 respectively, to the multicast-corresponding router ANR1.

In step S2307, the multicast control unit 10 sends a Copy primitive that instructs to duplicate the multicast packet (IPha_SN, G) and to transfer the duplicated multicast packet to the multicast--corresponding router ANR1, to the access router AR3.

In step S2308, the sending terminal SN sends the multicast packet (IPha_SN, G) to the access router AR3.

Next, in step S2309, the access router AR3 performs encapsulation processing to the received multicast packet (IPha_SN, G) and then transfers the encapsulated multicast packet. By the encapsulation processing, "an address of AR3" is set in "Source address" field, and "an address of ANR1" is set in "a Destination address" field.

In step S2310a, the multicast-corresponding router ANR1 performs encapsulation processing to the received multicast packet (IPha_SN, G), and then transfers the encapsulated multicast packet. By the encapsulation processing, "an address of ANR1" is set in "Source address" field, and "an address of AR1" is set in "a Destination address" field.

In step S2310b, the multicast-corresponding router ANR1 performs encapsulation processing to the received multicast packet (IPha_SN, G), and then transfers the encapsulated multicast packet. By the encapsulation processing, "an address of ANR1" is set in "Source address" field, and "an address of AR2" is set in "a Destination address" field.

In step S2311a, the access router AR1 performs decapsulation processing to the received multicast packet (IPha_SN, G) and transfers the decapsulated multicast packet to.a wireless segment. Accordingly, the receiving terminal MN1 can receive the multicast packet in which "IPha_SN" is set in its "Source address" and "G" is set in its "Destination address".

In step S2311b, the access router AR2 performs decapsulation processing to the received multicast packet (IPha_SN,G) and transfers the decapsulated multicast packet to a wireless segment. Accordingly, the receiving terminal MN2 can receive the multicast packet in which "IPha_SN" is set in its "Source address" and "G" is set in its "Destination address".

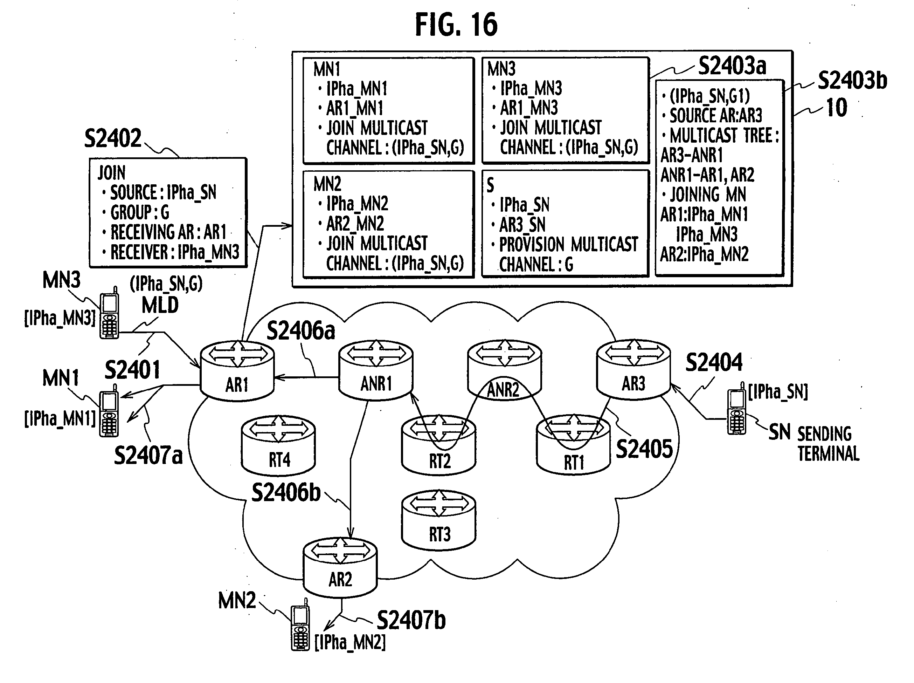

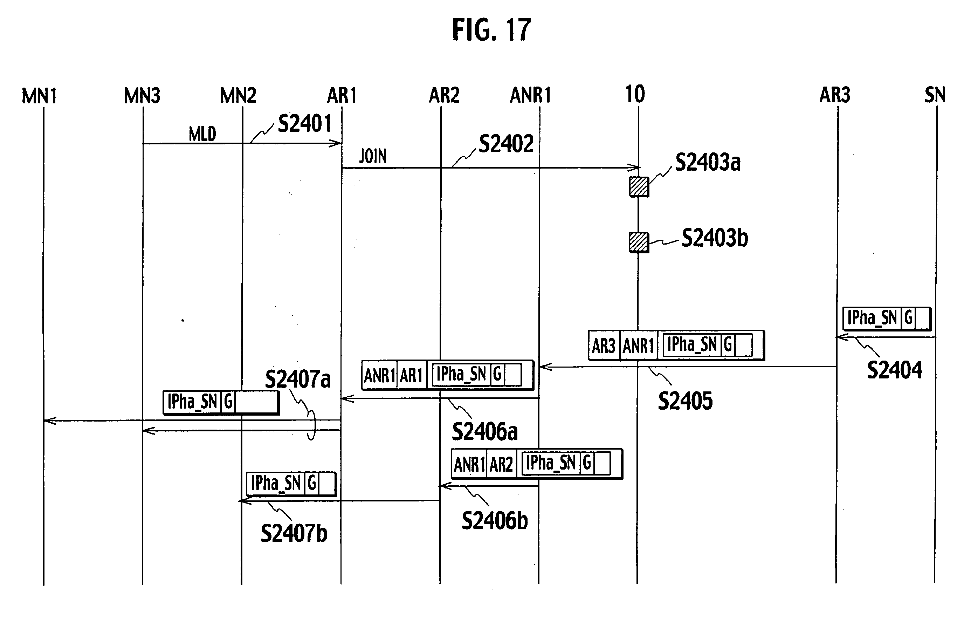

Thirdly, with reference to Figs. 16 and 17, it will be described how another receiving terminal MN3 joins the multicast channel (IPha_SN, G).

Here, the receiving terminal MN3 joins through the access router AR1 which is connected to the receiving terminal MN1 that has joined the multicast channel first.

As for steps S2401 to S2403a, processes are the same as those in the aforementioned steps S2201 to S2203 in Figs. 12 and 13.

In step S2403b, the multicast control unit 10 does not reconstruct a multicast tree. This is because a Join primitive is transferred through the access router AR1 which has been already connected to the receiving terminal MN1.

The multicast control unit 10 registers that the receiving terminal MN3 has joined under the access router AR1, to the multicast channel information storage unit 12.

As for steps S2404 to S2407b, processes are the same as those in the aforementioned steps S2308 to S2311b in Figs. 13 and 15.

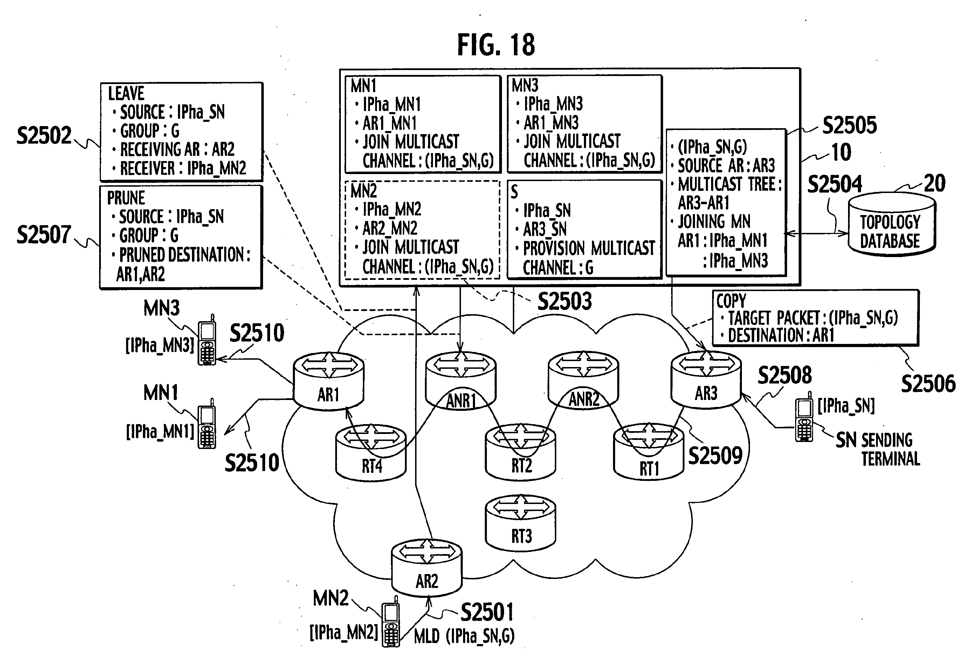

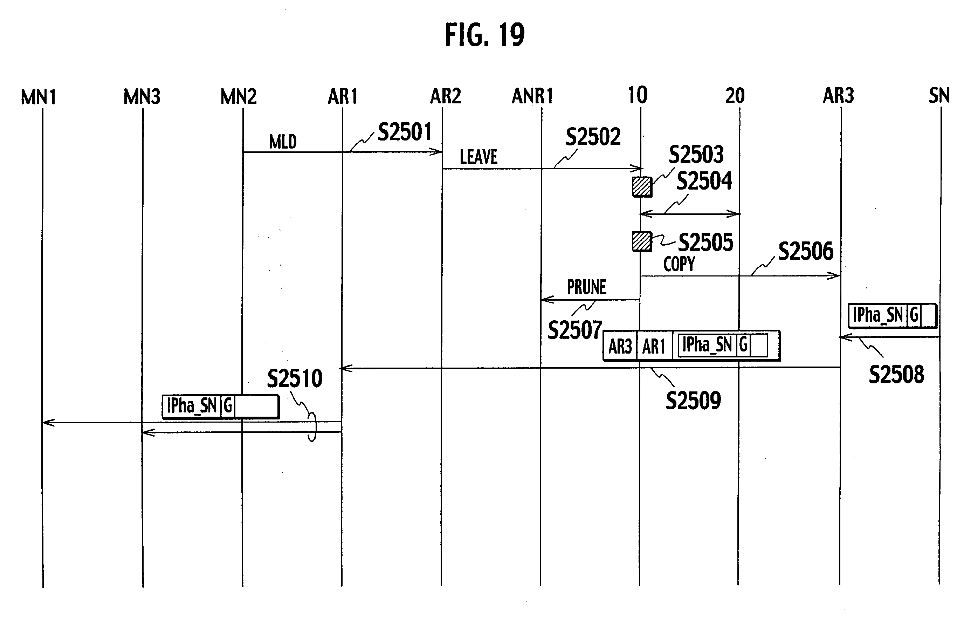

Fourthly, with reference to Figs. 18 and 19, it will be described how the receiving terminal MN2 leaves from the multicast channel (IPha_SN, G).

In step S250.1, the receiving terminal MN2 informs the multicast channel (IPha_SN, G) from which the receiving terminal MN2 will leave, to the access router AR2, by use of the MLD. Namely, the receiving terminal MN2 sends a leave request message to the access router AR2.

In step S2502, the access router AR2 issues a Leave primitive and informs the multicast control unit 10 of the multicast channel (IPha_SN, G) that the MN2 requests to leave, an IP host address of the receiving terminal MN2, and the access router AR2 to which the receiving terminal MN2 is connected.

In step S2503, the multicast control unit 10 deletes receiving terminal information concerning the receiving terminal MN2 with respect to the multicast channel (IPha_SN, G) .

In step S2504, since the receiving terminal MN2 is going to leave, the multicast control unit 10 judges that a multicast tree needs to be reconstructed. Accordingly, the multicast control unit 10 cooperates with Topology DB 20 to construct a new multicast tree.

In step S2505, the multicast control unit 10 registers the newly constructed multicast tree in the multicast channel information storage unit 12, and deletes information concerning the receiving terminal MN2 and the access router AR2 to which the receiving terminal MN2 is connected.

In step S2506, the multicast control unit 10 sends a Copy primitive to the access router AR3. By this primitive, the multicast control unit 10 instructs to encapsulate the multicast packet (IPha_SN, G) and to transfer the encapsulated multicast packet to the access router AR1.

In step S2507, the multicast control unit 10 issues a Prune primitive in order to delete a multicast transfer cache table of the multicast-corresponding router ANR1 which is not necessary anymore.

Description of transfer processes of the multicast packet concerning steps S2508 to S2510 will not be described, because they are the same as those in the transfer processes of the aforementioned multicast packet.

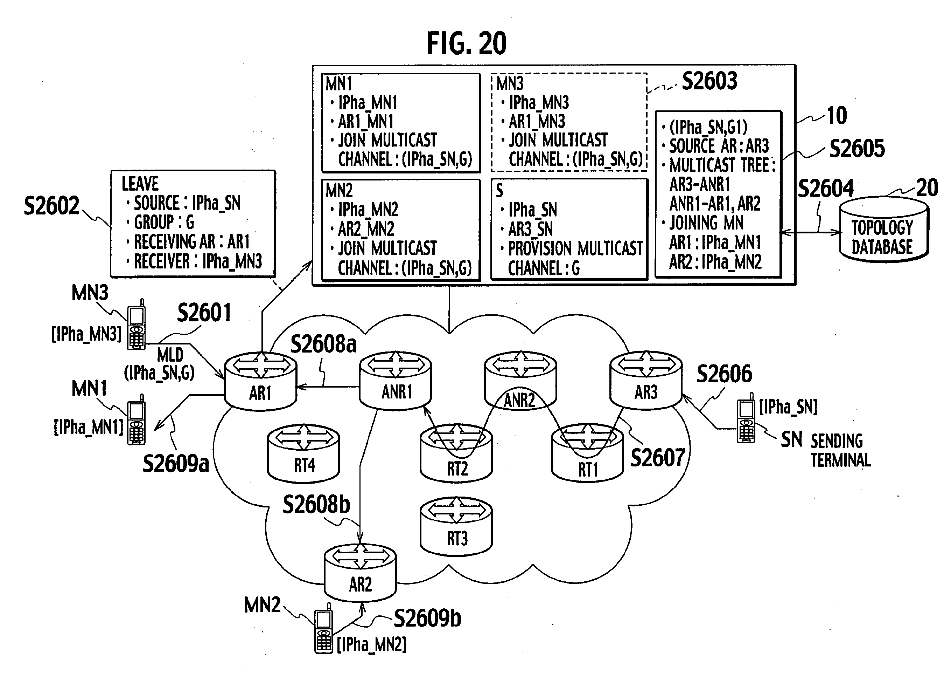

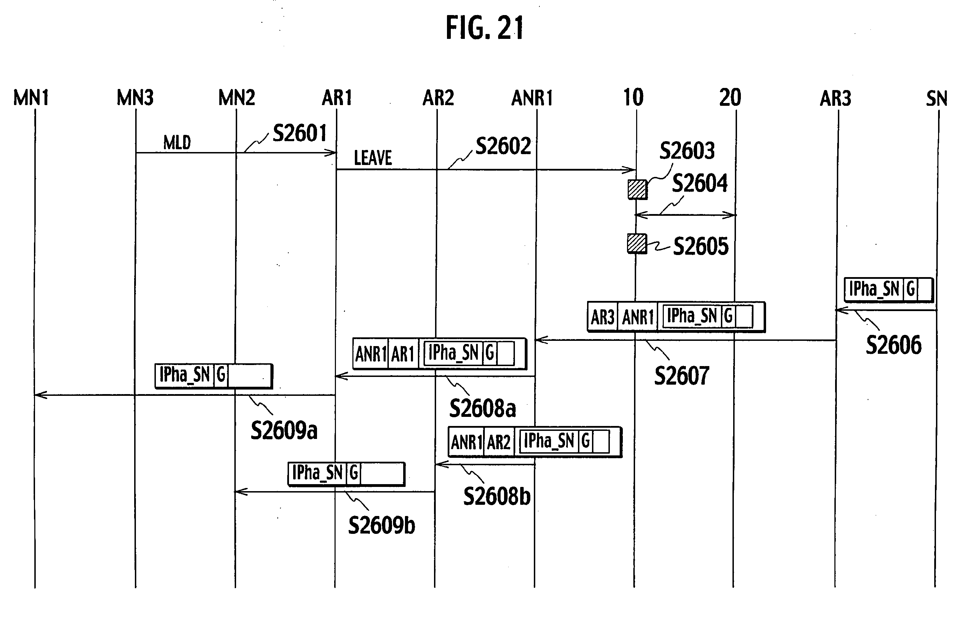

Fifthly, with reference to Figs. 20 and 21, it will be described how a receiving terminal MN3 leaves the multicast channel (IPha_SN, G), when both the receiving terminals MN1 and MN3 are joining the same multicast channel (IPha_SN, G) and connected to the same access router.

Processes in steps S2601 to S2603 are the same as those in steps S2501 to S2503 in Figs. 18 and 19.

In step S2604, the multicast control unit 10 judges that a multicast tree is not required to be reconstructed.

In step S2605, the multicast control unit 10 deletes information concerning the receiving terminal MN3 from the multicast channel information storage unit 12.

Since transfer processes of the multicast packet in steps S2606 to S2609 are the same as those in the aforementioned processes to transfer the multicast packet, description of the transfer processes are omitted.

Note that in Figs .20 and 21, in the case where both the receiving terminals MN1 and MN3 are joining the same multicast channel (IPha_SN, G) and connected to the same access router, and only the receiving terminal MN3 leaves the multicast channel (IPha_SN, G), in the aforementioned example, the multicast tree is described to be reconstructed.

However, it should be noted that the multicast tree may be kept as it is according to the present invention.

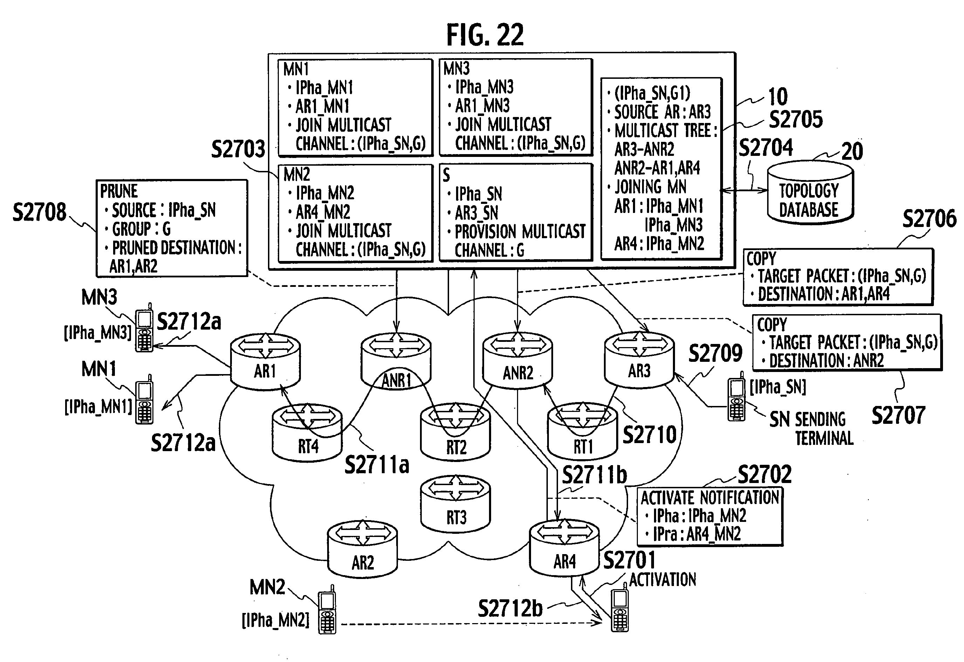

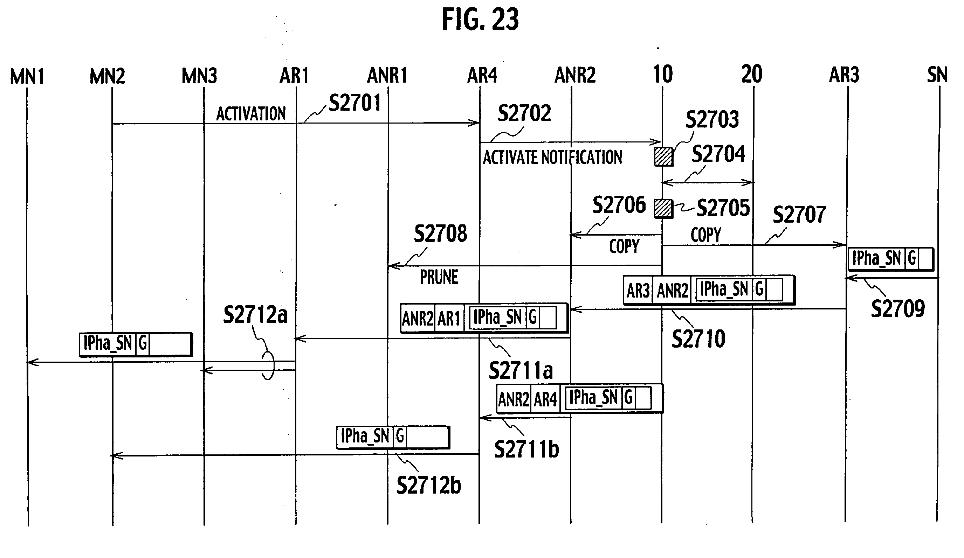

Sixth, with reference to Figs. 22 and 23, it will be described how the receiving terminal MN2 which is connected to the access router AR2 performs handover processing to another access router AR4.

In step S2701, when the receiving terminal MN2 is connected to the access router AR4, the receiving terminal MN2 sends "Activation" to the access router AR4, according to basic mobility control of the IP² system.

In step S2702, the access router AR4 receives "Activation", and allocates an IP routing address "'AR4_MN2" to the receiving terminal MN2.

Next, the access router AR4 sends an "Activate Notification (AN)" message to the multicast control unit 10, in order to inform the multicast control unit 10 of the allocated IP routing address "AR4_MN2".

In step S2703, the multicast control unit 10 receives the AN, and registers receiving terminal information concerning the receiving terminal MN2 to the receiving terminal information storage unit 14. This receiving terminal information contains the IP routing address "AR4_MN2" which has been allocated to the receiving terminal MN2.

In step S2704, the multicast control unit 10 judges that the multicast tree needs to be reconstructed. Accordingly, the multicast control unit 10 cooperates with Topology DB 20 to construct the multicast tree (AR3 ' ANR2 ' AR1, AR2).

In step S2705, the multicast control unit 10 registers the reconstructed multicast tree which has been reconstructed in the multicast channel information storage unit 12.

The multicast control unit 10 also registers that the receiving terminal MN2 receives the multicast packet (IPha_SN, G) through the access router AR4.

In step S2706, the multicast control unit 10 issues a Copy primitive to the multicast-corresponding router ANR2 which has been newly branched. The Copy primitive is an instruction to duplicate the multicast packet (IPha_SN, G) and to transfer the duplicated multicast packet to the access routers AR1 and AR4.

In step S2707, the multicast control unit 10 sends a Copy primitive to the access router AR3 to instruct encapsulation processing of the multicast packet (IPha_SN, G) and transfer the encapsulated multicast packet to the multicast-corresponding router ANR2.

In step S2708, the multicast control unit 10 issues a Prune primitive in order to delete the multicast transfer cache table in the multicast-corresponding router ANR1. The multicast-corresponding router ANR1 is a branch point that is not required anymore.

Since transfer processes of the multicast packet in steps S2709 to S2712b are the same as those mentioned above, description thereof is omitted.

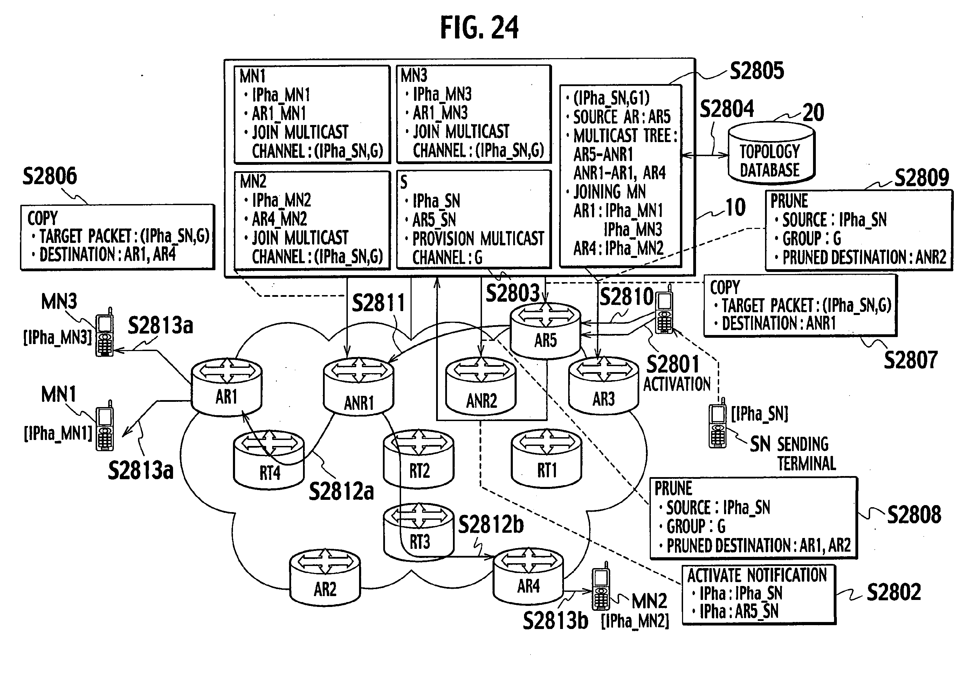

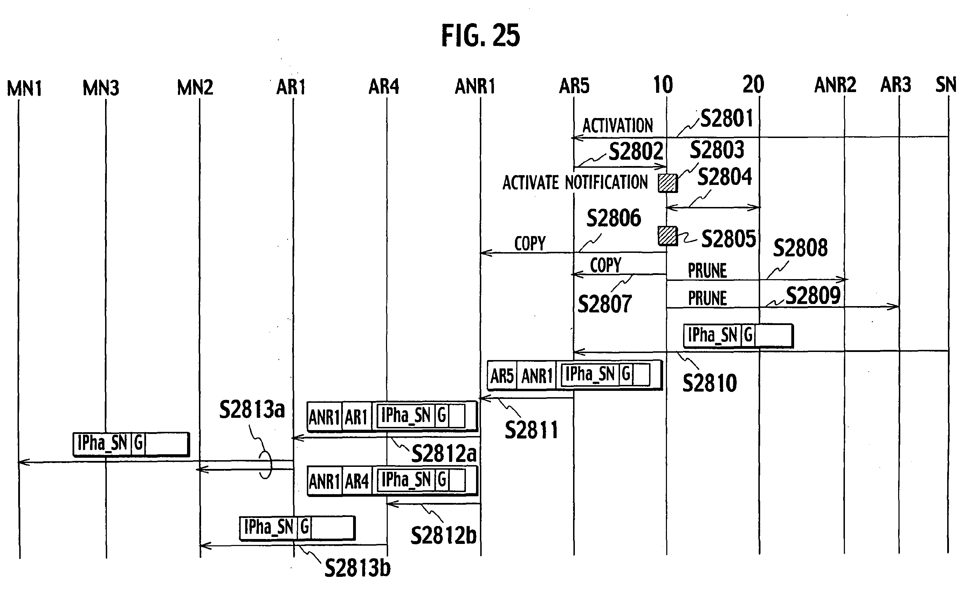

Seventhly, with reference to Figs. 24 and 25, it will be described how the sending terminal SN connected to the access router AR3 performs handover processing to the access router AR5.

Processes in steps S2801 to S2803 are the same as those in steps S2701 to S2703 described above with respect to the Figs. 22 and 23.

In step S2804, when the sending terminal SN performs the handover processing, the multicast control unit 10 judges a multicast tree is required to be reconstructed.

Next, the multicast control unit 10 cooperates with Topology DB 20, and reconstructs the multicast tree (AR5 → ANR1 →AR1, AR4) .

In step S2805, the multicast control unit 10 registers the reconstructed multicast tree and the access router AR5 to which the sending terminal SN is connected after the handover processing, in the multicast channel information storage unit 12.

In step S2806, the multicast control unit 10 issues a Copy primitive to the multicast-corresponding router ANR1. The Copy primitive is an instruction to duplicate the multicast packet (IPha_SN, G) and to transfer the duplicated multicast packet to the access routers AR1 and AR4.

In step S2807, the multicast control unit 10 instructs the access router AR5 to perform encapsulation processing of the multicast packet (IPha_SN, G) and to transfer the encapsulated multicast packet to the multicast-corresponding router ANR1.

In step S2809, the multicast control unit 10 issues a Prune primitive to the access router AR3 constituting the multicast tree which was been keeping before the handover processing, in order to delete the multicast transfer cache table. The access router AR3 has not been a branch point anymore after the handover processing.

In step S2808, the multicast control unit 10 issues a Prune primitive to the multicast-correaponding router ANR2 constituting the multicast tree which was been keeping before the handover processing, in order to delete the multicast transfer cache table. The multicast-corresponding router ANR2 has not been a branch point anymore after the handover processing.

Transfer processes of the multicast packet concerning steps S2810 to S2813b are the same as those mentioned above. Description thereof will be accordingly omitted.

According to the processes in Fig. 24 and 25, the multicast packet can be always identified by (IPha_SN, G) within the packet transfer network. This is because a source address of the multicast packet has been kept unchanged, even if the sending terminal SN moves.

In the SSM system, when the sending terminal SN moves, all of the multicast trees are required to be reconstructed. However, such a whole reconstruction is not required here, and a part of the multicast tree can be kept used, even after the sending terminal SN has performed handover processing.

### (The Operation and Effect of the Mobile Communication System according to a First Embodiment of the Present Invention)

According to this embodiment of the present invention, each of the multicast-corresponding routers ANR and AR within the packet transfer network transfers multicast packets based on a multicast tree constructed by a server device NCPF.

Therefore, a node for constructing the multicast tree (a server device) can be accordingly separated from a node for transferring the multicast packet (a multicast-corresponding router). This permits the reduction of load applied to the multicast-corresponding routers ANR and AR.

According to this embodiment of the present invention, multicast communication can be realized by preparing a multicast transfer table only for multicast-corresponding routers operating as branch points. Therefore, the number of multicast transfer tables within the packet transfer network can be reduced.

Furthermore, according to the mobile communication system based on this embodiment of the present invention, only the routers operating as branch points are required to be multicast-corresponding routers to attain multicast communication. Namely, all of the routers within the packet transfer network are not required to be multicast-corresponding routers.

Still furthermore, according to the mobile communication system of this embodiment of the present invention, the multicast control unit 10 is configured to construct the multicast tree when a join request message (Join message) or a leave request message (Leave message) is sent from the receiving terminal MN or when the access router AR to which the sending terminal SN is connected is changed.

Therefore, the mobility control of communication terminals can be accordingly supported by the system using the IP² system.

As a result, as compared to mobile communication systems which support the mobility control of communication terminals by operating with protocols such as SSM system and Mobile IP, this embodiment of the present invention provides an excellent mobile communication system in terms of processing loads.

Also, according to the mobile communication system of this embodiment of the present invention, even when the sending terminal SN performs handover processing, all of the multicast transfer cache tables are not necessarily required to be changed in order to continue the multicast communication.

This is because the IP host address "IPha_SN" of the sending terminal SN and the multicast address "G" are used as keys to identify the multicast packet, and the IP host address "IPha_SN" of the sending terminal SN is not changed.

The mobile communication system according to this embodiment of the present invention can support peer-to-peer type multicast communication, as well as multicast communication which is downloadable from the server device NCPE.

### (Modified Embodiment 1)

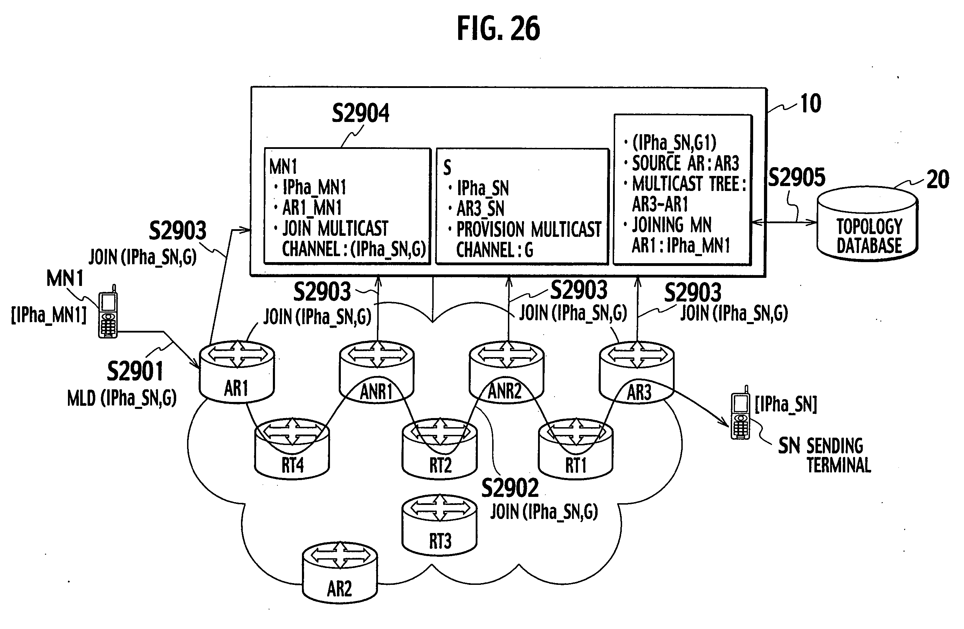

With reference to Fig. 26, a mobile communication system according to a modified embodiment 1 of the present invention will be described. Fig. 26 shows how a receiving terminal MN1 joins a multicast channel (IPha_SN, G).

According to the above-described first embodiment of the present invention, the access router AR1 receives a Join message by use of MLD to join the multicast channel (IPha_SN, G) from the receiving terminal MN1.

Next, the access router AR1 issues a Join primitive and informs the multicast control unit 10 of the Join message. And then, a multicast tree is constructed.

However, in this modified embodiment of the present invention, the access router AR1 having received MLD does not transfer a Join primitive to a multicast control unit 10, but transfers a Join message to a sending terminal SN.

Then, all of multicast-corresponding routers ANR and AR on a transfer route inform, to the multicast control unit 10, that the Join message has been received. A multicast tree is thereby prepared.

With reference to Fig. 26, the mobile communication system according to this modified embodiment of the present invention will be described.

In step 52901, the receiving terminal MN1, by use of MLD, informs a multicast channel (IPha_SN, G) which the receiving terminal MN1 is going to join, to the access router AR1 to which the receiving terminal MN1 is connected.

In step S2902, the access router AR1 converts the MLD into a Join message, and sends the converted Join message to the access router AR3 to which the sending terminal SN is connected.

In step S2903, multicast-corresponding routers AR1, ANR1, ANR2, and AR3 existing on the transfer route between the access router AR1 and the access router AR3 inform, to a multicast control unit 10, that the Join message to the multicast channel (IPha_SN, G) from the receiving terminal MN1 has been received.

In step S2904, the multicast control unit 10, in response to the aforementioned notification, registers receiving terminal information concerning the receiving terminal MN1 to a receiving terminal information storage unit 14.

In step S2905, the multicast control unit 10, in the packet transfer network, constructs a multicast tree based on information concerning multicast-corresponding routers which have sent the aforementioned notification and information controlled by Topology DB 20.

Although such operations of the mobile communication system departs from the design policy of "Separation of U-plane/C-plane control" in the IP² technique, the Join message can be sent to the sending terminal SN, even when the sending terminal SN resides out of the packet transfer network of the IP² technique, namely, resides in an external network:

Accordingly, a multicast tree can be constructed without connecting with an external network.

According to the aforementioned first embodiment, the multicast channel information storage 12 manages all the information concerning all of the receiving terminals MN and the access routers AR to which the receiving terminals MN are connected.

It should be noted that the multicast channel information storage unit 12 can be configured not to store all the information concerning the receiving MN.

Instead, the multicast channel information storage unit 12 can be Configured to connect to the access routers AR having relations with the receiving terminals MN, in order to count the number of the receiving terminals MN.

In this case, the multicast control unit 10 is configured to reconstruct a multicast tree, when the number of the receiving terminals is converted from "0" to "1" or "1" to "0" .

In this specification, the receiving terminal MN is configured to use the MLD in order to notify a join request message (Join message) to a specific multicast channel or a leave request message (Leave message) from a specific multicast channel. However, the receiving terminal MN may use IGMPv3 and the like instead of the MLD.

### (Modified embodiment 2)

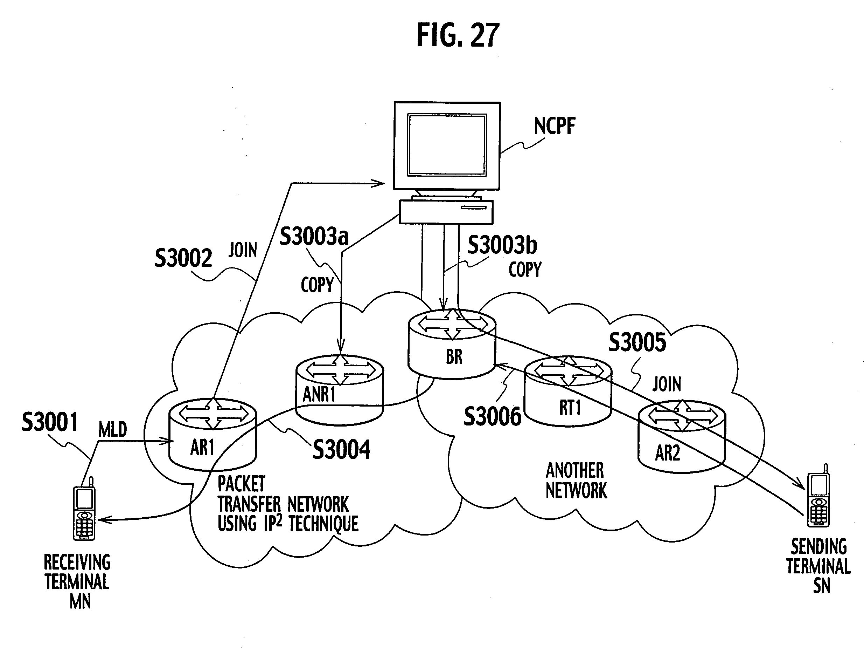

With reference to Fig. 27, the mobile communication system according to a modified embodiment 2 of the present invention will be described.

In the aforementioned first embodiment, both the sending terminals and the receiving terminals of the multicast packet are configured to be connected within the same packet transfer network using the IP² technique.

However, in actual management of the mobile communication system, it is considered that either the sending terminal or the receiving terminal of the multicast packet is connected to a network out of the packet transfer network using the IP² technique.

The mobile communication system according to this modified embodiment is configured to realize multicast communication, even when the sending terminal and the receiving terminal are connected to different networks respectively.

In the mobile communication system according to this modified embodiment, as shown in Fig. 27, it is assumed that the sending terminal SN resides out of the packet transfer network using the IP² technique.

Step S3001, the receiving terminal MN uses the MLD to inform an access router AR1 of the multicast channel to which the receiving terminal MN hopes to join.

In step S3002, the access router AR1 issues a Join primitive, in order to inform the server device NCPF of the multicast channel to which the receiving terminal MN is going to join.

In steps S3003a, S3003b, and S3004, the server device NCPF refers to Topology DB, in order to judge to which network the sending terminal SN belongs and to which boundary router BR the network is connected.

The server device NCPF constructs a multicast tree between the boundary router BR and the access router AR1 to which the receiving terminal MN is connected.

In step S3005, the server device NCPF constructs a multicast tree on the transfer route from the boundary router BR to the sending terminal SN.

Therefore, the server device NCPF sends the Join message to the sending terminal SN through the boundary router BR.

In step S3006, when any router on the aforementioned transfer route has received the Join message, a multicast tree is constructed according to a multicast protocol defined in each network. As a result, a multicast tree is constructed from the sending terminal SN to the boundary router BR.

The boundary router BR connects the constructed multicast tree and the multicast tree constructed by use of the IP² system within the packet transfer network, so as to realize multicast communication between the sending terminal SN and the receiving terminal MN.

### (Modified embodiment 3)

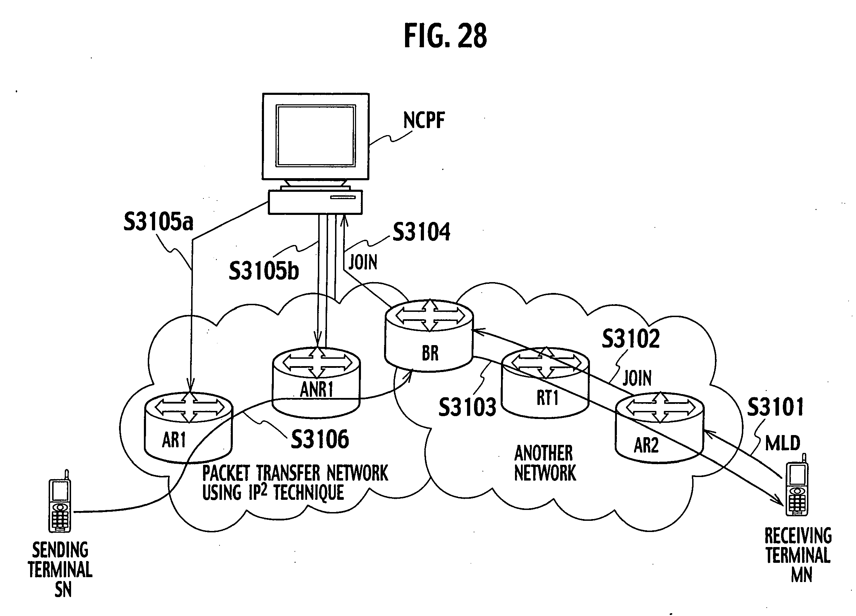

With reference to Fig. 28, the mobile communication system according to a modified embodiment 3 of the present invention will be described.

As shown in Fig. 28, in this modified embodiment, the sending terminal SN is assumed to be connected to the packet transfer network using the IP² technique, while the receiving terminal MN is assumed to be connected to another network.

Processes of the mobile communication system according to this modified embodiment of the present invention are almost opposite to those shown in Fig. 27. A similarity is that multicast trees constructed at each network are connected at the boundary router BR.

However, when a multicast tree is constructed in the packet transfer network using the IP² technique, it is assumed that the server device NCPF and the receiving terminal MN are connected to the boundary router BR. The multicast tree is constructed under this assumption.

As described heretofore, according to the present invention, it is possible to provide a mobile communication system, a mobile communication method, a server device, and a sending terminal, which can support the mobility control of communication terminals in multicast communication without increasing process loads.

Additional advantages and modifications will readily occur to those skilled in the art. Therefore, the invention in its broader aspects is not limited to the specific details and the representative embodiments shown and described herein. Accordingly, various modifications may be made without departing from the scope of the general inventive concept as defined by the appended claims and their equivalents.

## Claims

1. A server device used in a mobile communication system which transfers a multicast packet sent from a sending terminal to a receiving terminal through a packet transfer network, comprising:
a multicast tree determination unit configured to determine a multicast tree showing a transfer route of the multicast packet; and
an instruction unit configured to instruct a multicast-corresponding router within the packet transfer network to prepare a multicast transfer table used for transferring the multicast packet, in accordance with a determined multicast tree.

2. The server device according to claim 1, comprising a multicast information storage unit configured to store multicast information which include the multicast tree for the multicast packet, a list of receiving terminals set to receive the multicast packet, and an access router to which the sending terminal which sends the multicast packet is connected.

3. The server device according to claim 1, wherein the instruction unit is configured to instruct the instruction only to a multicast-corresponding router which is to be a branch point in the multicast trees.

4. The server device according to claim 1, wherein the multicast tree determination unit is configured to determine the multicast tree, when a join request message or a leave request message is sent from the receiving terminal.

5. The server device according to claim 1, wherein the multicast tree determination unit is configured to determine the multicast tree, when an access router to which the sending terminal is connected is changed.

6. A sending terminal used in mobile communication system for transferring a multicast packet sent from the sending terminal to a receiving terminal through a packet transfer network, comprising a multicast packet sender unit configured to send the multicast packet containing a host address of the sending terminal and a multicast address,

7. A mobile communication system for transferring a multicast packet sent from a sending terminal to a receiving terminal through a packet transfer network, wherein a server device connected to the packet transfer network comprises:
a multicast tree determination unit configured to determine a multicast tree showing a transfer route of the multicast packet; and
an instruction unit configured to instruct a multicast-corresponding router in the packet transfer network to prepare a multicast transfer table used for transferring the multicast packet, in accordance with a determined multicast tree; and
the multicast-corresponding router comprises a packet transfer unit configured to transfer the multicast packet, based on the multicast transfer table prepared in accordance with the instruction.

8. A mobile communication method for transferring a multicast packet sent from a sending terminal to a receiving terminal through a packet transfer network, comprising of:
determining a multicast tree showing a transfer route of the multicast packet, in a server device connected to the packet transfer network;
instructing a multicast-corresponding router within the packet transfer network to prepare a multicast transfer table used for transferring the multicast packet, in accordance with a determined multicast tree, in the server device; and
transferring the multicast packet based on the multicast transfer table prepared in accordance with the instruction, in the multicast-corresponding router.
